# EUROPÄISCHE PATENTSCHRIFT

(11) **EP 2 606 211 B1**
(45) Veröffentlichungstag und Bekanntmachung des Hinweises auf die Patenterteilung: **01.03.2017**
(21) Anmeldenummer: 11757531.6
(22) Anmeldetag: 19.08.2011
(51) Int. Cl.: F02B 19/10, F02B 19/12

(54) **VORKAMMERSYSTEM**
PRECHAMBER SYSTEM
SYSTÈME AVEC UNE PRE-CHAMBRE

(30) Priorität: 03.11.2010 AT 18102010; 20.08.2010 AT 13952010
(43) Veröffentlichungstag der Anmeldung: 26.06.2013
(73) Patentinhaber: GE Jenbacher GmbH & Co. OG, 6200 Jenbach (AT)
(72) Erfinder: REDTENBACHER, Christoph, A-8010 Graz (AT); WINTER, Hubert, A-8042 Graz (AT); SCHNEßL, Eduard, A-8934 Altenmarkt (AT); CHRISTINER, Peter, 8055 Graz (AT); KOGLER, Gerhard, 1050 Wien (AT); FIMML, Wolfgang, 6200 Jenbach (AT)
(74) Vertreter: Torggler & Hofinger Patentanwälte
(86) Internationale Anmeldenummer: PCT/AT2011/000351
(87) Internationale Veröffentlichungsnummer: WO 2012/021914

(56) Entgegenhaltungen:
- EP-A2- 0 276 193
- DE-C- 372 604
- GB-A- 207 181
- JP-A- 2002 266 645

## Beschreibung

Die Erfindung betrifft ein Vorkammersystem gemäß dem Oberbegriff des Anspruchs 1 und eine Brennkraftmaschine mit einem solchen Vorkammersystem.

In Verbrennungskraftmaschinen (Brennkraftmaschinen) ab einem bestimmten Hubvolumen reicht die Energie eines Zündfunkens nicht mehr aus, um das - aus Gründen der Emissionen - häufig sehr magere Brenngas-Luft-Gemisch im Hauptbrennraum sicher zu entzünden. Zur Erhöhung der Zündenergie wird ein kleiner Teil des Gemisches in einer Vorkammer, die über Kanäle mit dem Hauptbrennraum in Verbindung steht, mit einer kleinen Menge an Brenngas oder eines zusätzlichen Brennstoffes angereichert und entzündet. Die Verbrennung schlägt über die Überströmkanäle aus der Vorkammer in Form von Zündfackeln in den Hauptbrennraum über und entzündet dort das magere Gemisch.

In der DE 10 2008 015 744 A1 ist beispielsweise eine Zündeinrichtung mit Vorkammer beschrieben, In die eine Brenngasdüse (Gasventil) mündet, die an eine Hochdruck-Brenngas-Leitung angeschlossen ist, um Brenngas unter hohem Druck in die Vorkammer einzubringen. Hierbei wird das Brenngas mit einem in der Vorkammer befindlichen, mageren (überstöchiometrischen) Brenngas-Luft-Gemisch unter Anreicherung desselben vermischt. In die Vorkammer ragt eine Zündeinrichtung hinein, um das angereicherte Brenngas-Luft-Gemisch zu entzünden und so letztendlich für eine Zündung des in der Hauptbrennkammer befindlichen Brenngas-Luft-Gemischs zu sorgen.

Bei diesen so genannten gasgespülten Vorkammern wird während des Ansaug- und /oder Verdichtungstaktes über ein Ventil eine bestimmte Gasmenge über ein Ventil in die Vorkammer eindosiert. Etwa zeitgleich wird ein überstöchiometrisches (λ> 1) Gas-Luft Gemisch dem Hauptbrennraum über das Einlassventil zugeführt. Einen nach dem Verfahren "gespülte Vorkammer" betriebenen Motor beschreibt beispielsweise die DE 10 2004 016 260 B4 (Caterpillar).

Im Verdichtungstakt strömt mageres Gemisch aus dem Hauptbrennraum in die Vorkammer und vermischt sich mit dem dort befindlichen fetten Gemisch. Ziel ist die Einstellung einer stöchiometrischen Zusammensetzung (A ∼ 1) für ein zündwilliges Gemisch mit hoher Zündenergie.

Die US 6,129,059 A (HONDA MOTOR CO LTD) beschreibt eine Brennkraftmaschine und die Anordnung von Kanälen zwischen Hauptbrennraum und Vorkammer.

Die US 4,170,968 A (TOYOTA MOTOR CO LTD) geht näher auf die Anordnung der Überstromkanäle in die Vorkammer und die Lage der Zündkerze bezüglich dieser Kanäle ein.

Die DE 10 2004 016 260 (CATERPILLAR MOTOREN GMBH) zeigt einen Gasmotor mit Vorkammer, in welche über einen Kanal (3) Gas einströmt. Bei dem dargestellten Zylinderkopf (1) eines Gasmotors ist eine gespülte Vorkammer (2) und ein getrennter Gaszuführkanal (3) zur Versorgung eines Brennraums (4) mit Gas für die Zündenergie angeordnet, wobei der übliche Zündprozess über eine Zündkerze (8) erfolgt. In dem Gaszuführkanal (3) ist ein Magnetventil (5) in einen Aufnahmebereich (6) angeordnet und der Auslass mündet direkt in den Brennraum (4).

In der DE 372 604 C ist beispielsweise eine Zündeinrichtung mit Vorkammer beschrieben. Nachteile beim Stand der Technik:
Während sich in der Vorkammer bis zum Zündzeitpunkt ein mehr oder weniger homogenes Gemisch einstellt, verbleibt in dem Kanal, welcher die Brennstoffeinbringungseinrichtung (zum Beispiel Vorkammerventil) mit der Vorkammer verbindet (dieses Volumen wird im Folgenden als Schadraum bezeichnet) eine fette Zone, in der es während der Verbrennung zur Rußbildung kommt.

Diese Zone wird durch die beim Ladungswechsel in der Vorkammer eintretenden Strömung aus magerem Gemisch nicht erreicht.

Die Druckschriften EP 276 193 A2, JP 269022 U, JP 1145941 U und JP 2001082148 A zeigen jeweils ein Vorkammersystem für eine Brennkraftmaschine gemäß dem Oberbegriff des Anspruchs 1, wobei ein Kanal vorgesehen ist, der so verläuft, dass er bei in die Brennkraftmaschine eingebautem Vorkammersystem einen Hauptbrennraum der Brennkraftmaschine mit dem Schadraum verbindet.

Versuche der Patentinhaberin haben gezeigt, dass eine Verbindung des Hauptbrennraums mit dem Schadraum in Bezug auf die Rußreduktion zwar eine gewisse Besserung bringt, diese jedoch noch zu wünschen übrig lässt.

Aufgabe der Erfindung ist daher eine Maßnahme zur Reduzierung oder im besten Fall Verhinderung lokal fetterer (unterstöchiometrischer) Zonen im Schadraum anzubieten, um die oben genannten negativen Konsequenzen lokaler fetter Zonen (Rußbildung / Wirkungsgradeinbußen) zu verringern bzw. vermeiden.

Die Aufgabe wird gelöst durch ein Vorkammersystem gemäß Anspruch 1 sowie eine Brennkraftmaschine gemäß Anspruch 4.

Um fette Zonen im Schadraum und damit die Bildung von Rußpartikeln zu vermeiden, wird in der erfindungsgemäßen Vorkammer der Schadraum gespült. Hierzu wird ein zusätzlicher Kanal vorgesehen, der das Schadraumvolumen mit der Vorkammer solcherart verbindet, dass vorzugsweise unter Ausnutzung der natürlich vorhandenen Druckgefälle beim Ladungswechsel das Schadraumvolumen gespült wird.

Die erfindungsgemäße Brennkraftmaschine kann beispielsweise ein Gasmotor, insbesondere ein stationärer Gasmotor sein.

Vorteilhafte Ausführungsformen der Erfindung sind in den abhängigen Ansprüchen definiert.

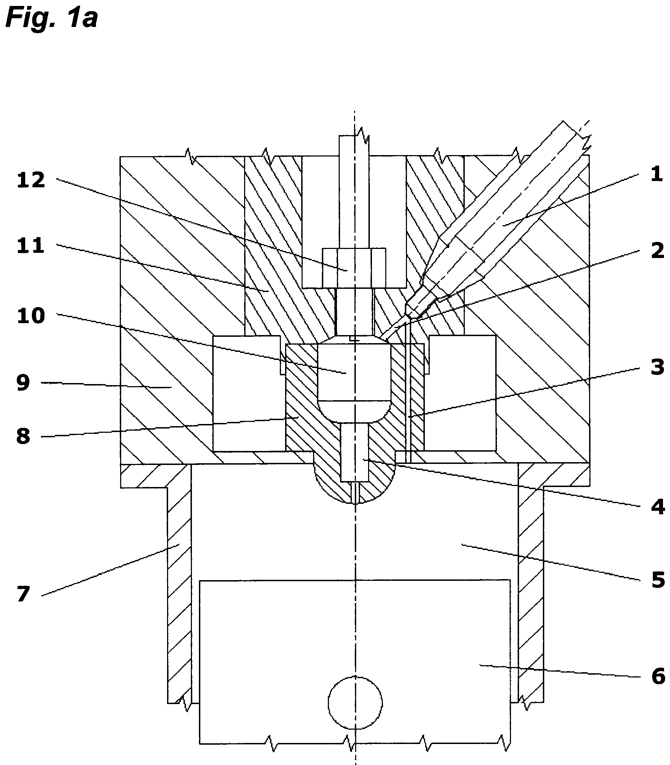

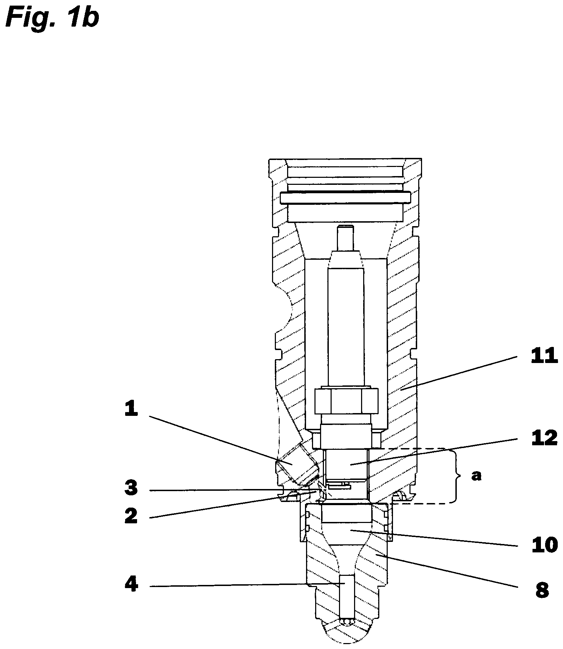

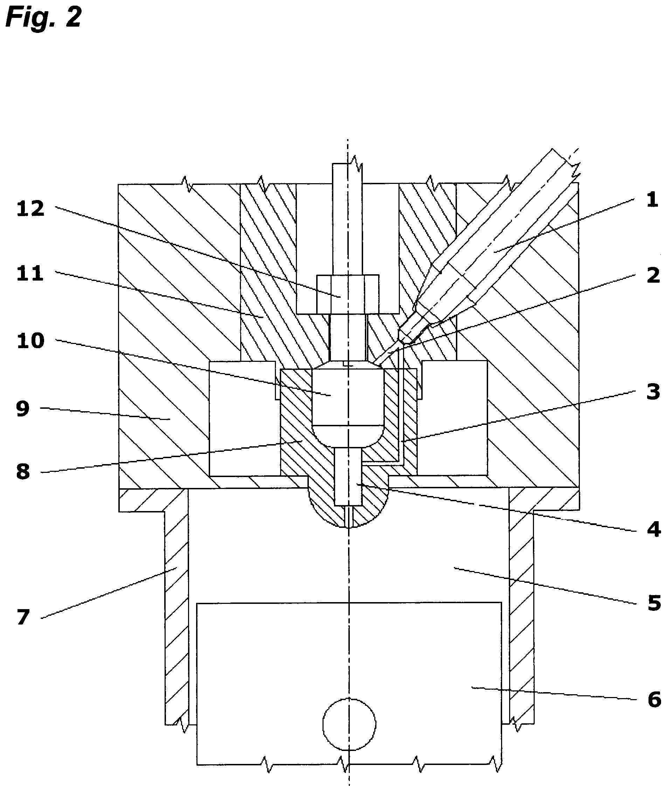

Die Figuren 1 a, 1b und 2 zeigen schematisch einen Ausschnitt einer Brennkraftmaschine im Bereich eines Zylinderkopfes:
Zur Fig. 1 a (Stand der Technik):
   Fig. 1 a zeigt ein Vorkammersystem mit einer durch eine Vorkammerwand 8 gebildete Vorkammer 10. Der Kanal 3 verbindet den Schadraum 2 mit dem Hauptbrennraum 5. Er ist dabei so angeordnet, dass er unmittelbar im Bereich des Sitzes der der Brennstoffeinbringungsvorrichtung 1 (zum Beispiel Rückschlagventil) in den Schadraum 2 mündet. Im Verdichtungstakt fungiert der Kanal 3 als Steigleitung. Durch das sich einstellende Druckgefälle vom Hauptbrennraum 5 zur Vorkammer 10 strömt über den Kanal 3 mageres Gemisch aus dem Hauptbrennraum 5 in den Schadraum 2 und verdünnt das sich dort befindliche fette Gemisch bzw. spült fettes Gemisch in die Vorkammer 10. Zum Zündzeitpunkt befindet sich daher im Schadraum 2 ein im Vergleich zu einer Variante ohne Spülung abgemagertes Gemisch, was eine starke Reduktion bzw. Vermeidung der Rußbildung im Schadraum 2 bewirkt.
Zur Fig. 1b (erfindungsgemäße Variante):
   Hier mündet der Kanal 3 im Bereich eines Befestigungsabschnittes, hier eines Gewindes (erstreckt sich über Bereich a) der Zündkerze 12 in die Vorkammer 10 ein. Diese Variante ist fertigungstechnisch günstiger als jene der Fig. 1 a oder der Fig. 2.
Zur Fig. 2 (erfindungsgemäße Variante):
   Der Kanal 3 verbindet den Schadraum 2 (entsprechend obiger Beschreibung) mit dem Überströmkanal 4 der Vorkammer 10. Im Verdichtungstakt treten im Überströmkanal 4 hohe Strömungsgeschwindigkeiten auf. Entsprechend dem Venturi-Effekt stellt sich daher im Überströmkanal 4 ein Unterdruck im Vergleich zum Schadraum 2 ein. Somit wird fettes Gemisch aus dem Schadraum 2 herausgesaugt und dem aus dem Hauptbrennraum 5 in die Vorkammer 10 einströmenden mageren Gemisch zugemischt, wobei sich diese Zumischung positiv auf die Gemischhomogenität in der Vorkammer 10 auswirkt. Gleichzeitig wird aus der Vorkammer 10 mageres Gemisch in den Schadraum 2 nachgesaugt, sodass sich dort zum Zündzeitpunkt weitestgehend mageres, sich über der Rußbildungsgrenze befindliches Gemisch einstellt.

- **1**: Brennstoffeinbringungsvorrichtung, zum Beispiel Gasventil
- **2**: Schadraum
- **3**: Kanal für Schadraumspülung
- **4**: berströmkanal
- **5**: Hauptbrennraum
- **6**: Kolben
- **7**: Zylinderbuchse
- **8**: Vorkammerwand
- **9**: Zylinderkopf
- **10**: Vorkammer
- **11**: Zündkerzenhülse
- **12**: Zündkerze

## Patentansprüche

1. Vorkammersystem für eine Brennkraftmaschine, mit:
- einer Vorkammer (10),
- einer Brennstoffeinbringungseinrichtung (1),
- einem die Brennstoffeinbringungseinrichtung (1) mit der Vorkammer (10) verbindenden Schadraum (2),
wobei ein Kanal (3) vorgesehen ist, der die Vorkammer (10) mit dem Schadraum (2) verbindet, **dadurch gekennzeichnet, dass** der Kanal (3) zwischen der Brennstoffeinbringungseinrichtung (1) und der Vorkammer (10) in den Schadraum (2) einmündet.

2. Vorkammersystem nach Anspruch 1, wobei das Vorkammersystem einen Befestigungsabschnitt, vorzugsweise ein Gewinde zum Befestigen einer Zündkerze (12) aufweist, **dadurch gekennzeichnet, dass** der Kanal (3) im Bereich des Befestigungsabschnitts in die Vorkammer (10) einmündet.

3. Vorkammersystem nach Anspruch 1, wobei die Vorkammer (10) einen Überströmkanal (4) aufweist, **dadurch gekennzeichnet, dass** der Kanal (3) den Überströmkanal (4) der Vorkammer (10) mit dem Schadraum (2) verbindet.

4. Brennkraftmaschine mit wenigstens einem Vorkammersystem nach einem der Ansprüche 1 bis 3 und wenigstens einem Hauptbrennraum (5), wobei ein Kanal (3) vorgesehen ist, der die Vorkammer (10) mit dem Schadraum (2) verbindet.

## Claims

1. A prechamber system for an internal combustion engine, with:
- a prechamber (10),
- a fuel introduction device (1)
- a dead space (2) connecting the fuel introduction device (1) with the prechamber (10),
wherein a channel (3) is provided which connects the prechamber (10) with the dead space (2), **characterized in that** the channel (3) opens into the dead space (2) between the fuel introduction device (1) and the prechamber (10).

2. The prechamber system as claimed in claim 1, wherein the prechamber system has a fixing segment, preferably a thread to fix a spark plug (12), **characterized in that** the channel (3) opens into the prechamber (10) in the region of the fixing segment.

3. The prechamber system as claimed in claim 1, wherein the prechamber (10) has an overflow channel (4), **characterized in that** the channel (3) connects the overflow channel (4) of the prechamber (10) with the dead space (2).

4. An internal combustion engine with at least one prechamber system as claimed in any one of claims 1 to 3 and at least one main combustion chamber (5), wherein a channel (3) is provided which connects the prechamber (10) with the dead space (2).

## Revendications

1. Système de préchambre pour un moteur à combustion interne, avec :
- une préchambre (10),
- un dispositif d'introduction de carburant (1),
- un espace mort (2) reliant le dispositif d'introduction de carburant (1) à la préchambre (10),
dans lequel un canal (3) est prévu, lequel relie la préchambre (10) à l'espace mort (2), **caractérisé en ce que** le canal (3) débouche entre le dispositif d'introduction de carburant (1) et la préchambre (10) dans l'espace mort (2).

2. Système de préchambre selon la revendication 1, dans lequel le système de préchambre présente une section de fixation, de préférence un filetage pour la fixation d'une bougie d'allumage (12), **caractérisé en ce que** le canal (3) débouche dans la zone de la section de fixation dans la préchambre (10).

3. Système de préchambre selon la revendication 1, dans lequel la préchambre (10) présente un canal de trop-plein (4), **caractérisé en ce que** le canal (3) relie le canal de trop-plein (4) de la préchambre (10) à l'espace mort (2).

4. Moteur à combustion interne avec au moins un système de préchambre selon l'une quelconque des revendications 1 à 3 et au moins un espace de combustion principal (5), dans lequel un canal (3) est prévu, lequel relie la préchambre (10) à l'espace mort (2).
